# EUROPEAN PATENT APPLICATION

(11) **EP 3 632 810 A1**
(43) Date of publication of application: **08.04.2020**
(21) Application number: 17912003.5
(22) Date of filing: 31.05.2017
(51) Int. Cl.: B65D 33/01, B65D 81/20, F16K 15/00

(54) **SEALED BAG AND METHOD FOR USING SAME**

(71) Applicant: Wang, Yung-Ming, Taichung City, Taiwan (CN)
(72) Inventor: WANG, Chung-Shien, Taichung City (TW); WANG, Yung-Ming, Taichung City (TW)
(74) Representative: Viering, Jentschura & Partner mbB Patent- und Rechtsanwälte
(86) International application number: PCT/CN2017/086590
(87) International publication number: WO 2018/218498

(57) **Abstract**

A sealing bag (100) which could separate an inside of the sealing bag (100) from the outside includes a bag body (11), wherein a first zipper (12), a second zipper (13), and an exhaust device (14, 30) are disposed on the bag body (11). The bag body (11) has a storage space (111) and an opening (11a). The first zipper (12) is for closing the opening (11a) of the bag body (11). The second zipper (13) is for dividing the storage space (111) into a first sub-space (111a) located between the first zipper and the second zipper and a second sub-space (111b). The exhaust device (14, 30) is disposed between the first zipper and the second zipper for vacuuming air in the first sub-space (111a). Therefore, a force (F1) generated by the atmospheric pressure and exerted on the bag body (11) is greater than the force generated by the expansion of remain air in the second sub-space (111b), so that the second zipper (13) is always in a closed status (S2).

## Description

### BACKGROUND OF THE INVENTION

### Technical Field

The present invention relates generally to a sealing structure, and more particularly to a sealing bag and a method of using the same.

### Description of Related Art

A conventional sealing bag usually includes a storage space for receiving food or stuff, and two complementary zipper teeth are utilized to zip an opening of the sealing bag in order to keep the stored food or stuff apart from outside.

The conventional sealing bag is hard to exhaust air in the storage space. Therefore, as a temperature rises, the volume of air in the storage space expands. The two complementary zipper teeth leak because of the expansion, causing the storage space communicates with outside, so that the effect of storing food or stuff becomes worse.

To solve said problem, an improved sealing bag includes a perforation, and an air valve is installed around the perforation. After the food or staff is put into the storage space, the opening of the sealing bag is sealed via the two complementary zipper teeth. After that, a manual or an electric discharging device (e.g. vacuum cleaner) is utilized to discharge air in a bag body through the air valve in order to make the sealing bag almost vacuumed; assuring the stored food and stuff could be preserved for a long period of time.

However, the improved sealing bag has its disadvantages. First, when the sealing bag contains some powder-like substances, the air valve may be stocked by the powder-like substances, so that the sealing performance and the exhausting capability of the air valve are decreased. Second, though the discharging device could reduce the air in the storage space, but it's hard to make the storage space vacuumed. The left air is still possible to cause the two complementary zipper teeth leaked.

### BRIEF SUMMARY OF THE INVENTION

In view of the above, the primary objective of the present invention is to provide a sealing bag and a method of using the same, which could avoid the zipped two complementary zipper teeth leaking, in order to separate an inner space of the sealing bag from outside surroundings.

The present invention provides a sealing bag, including a bag body, a first zipper, a second zipper, and an exhaust device. The bag body has a storage space and an opening communicating the storage space and an outside of the bag body. The first zipper is disposed in the bag body and is adapted to seal the opening. The second zipper is disposed in the bag body and is adapted to divide the storage space into a first sub-space and a second sub-space, wherein the first sub-space is located between the first zipper and the second zipper. The exhaust device is disposed between the first zipper and the second zipper and is adapted to discharge air in the first sub-space to the outside.

The present invention provides a method of using the sealing bag of claim 1, including following steps: A. manipulate the first zipper to seal the opening of the bag body; B. manipulate the exhaust device to exhaust air in the storage space of the bag body to the outside; C. manipulate the second zipper to divide the storage space into the first sub-space and the second sub-space; D. manipulate the exhaust device to exhaust air in the first sub-space to the outside.

With the aforementioned design, the exhaust device could evacuate the air in the first sub-space and make the first sub-space almost vacuumed. Therefore, the force exerted by the atmosphere is greater than the force generated by the expansion of the left air in the second sub-space to the bag body, so that the second zipper could always keep sealed.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is a perspective view of the sealing bag of a first embodiment according to the present invention;
FIG. 2 is an enlarged partial view of FIG. 1;
FIG. 3 is a sectional view of the exhaust device of the first embodiment according to the current invention;
FIG. 4 is similar to FIG. 3;
FIG. 5 is a sectional view of the connecting tube of the first embodiment according to the current invention;
FIG. 6a is an enlarged partial view of FIG. 2;
FIG. 6b is similar to FIG. 6a;
FIG. 7a is a schematic view, showing the step 1 of using the sealing bag of the first embodiment according to the current invention;
FIG. 7b is a schematic view, showing the step 2 and 3 of using the sealing bag of the first embodiment according to the current invention;
FIG. 7c is a schematic view, showing the step 4 and 5 of using the sealing bag of the first embodiment according to the current invention;
FIG. 7d is a schematic view, showing the sealing bag of the first embodiment according to the present invention is sealed;
FIG. 8 is a flowchart, showing the steps of the using method of the sealing bag of the first embodiment according to the present invention;
FIG. 9 is a sectional view of the exhaust device of a second embodiment according to the current invention;
FIG. 10 is similar to FIG. 9;

### DETAILED DESCRIPTION OF THE INVENTION

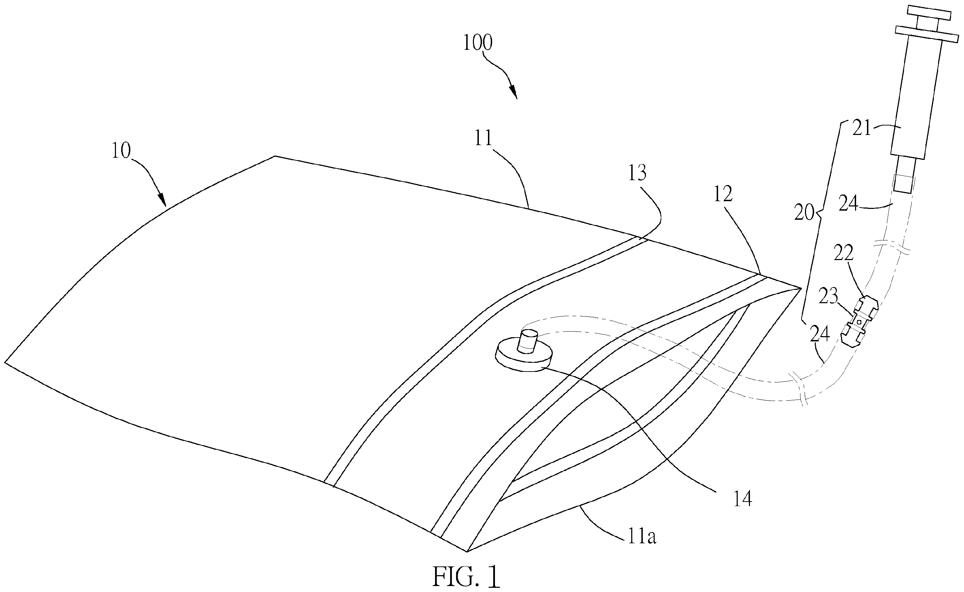

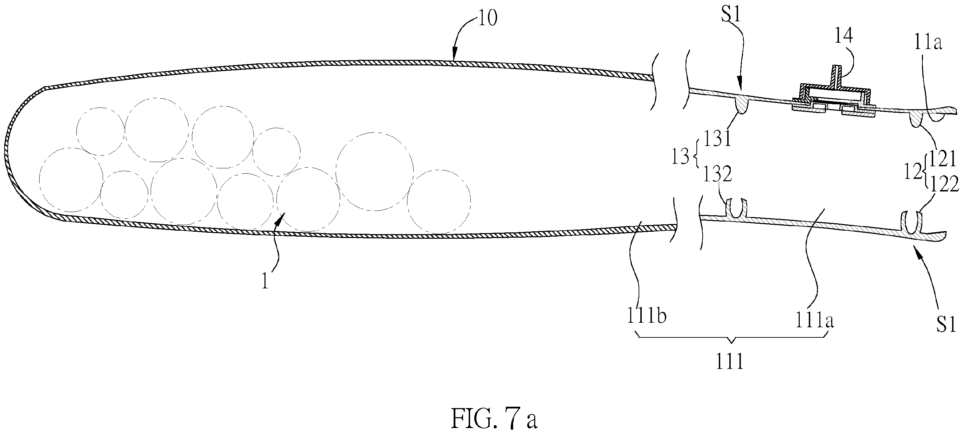

Referring to FIG. 1 to FIG. 7d, a sealing bag 100 of a first embodiment according to the present invention includes a receiving structure 10 and a discharging device 20.

The receiving structure 10 includes a bag body 11, a first zipper 12, a second zipper 13, and an exhaust device 14, wherein the first zipper 12, the second zipper 13, and the exhaust device 14 are disposed on the bag body 11. The bag body 11 has a storage space 111 and an opening 11a which connects the storage space 111 and an outside. An object 1 could be put into the storage space 111 through the opening 11a.

The first zipper 12 includes a first zipper teeth 121 and a second zipper teeth 122 which is complementary to the first zipper teeth 121. The second zipper 13 includes a third zipper teeth 131 and a fourth zipper teeth 132 which is complementary to the third zipper teeth 131. The first zipper 12 and the second zipper 13 could be manipulated between an opened status S1 and a closed status S2, wherein the opened status S1 is that the complementary zipper teeth (i.e., the first zipper teeth 121 and the second zipper teeth 122, or the third zipper teeth 131 and the fourth zipper teeth 132) are separated; the closed status S2 is that the complementary zipper teeth (i.e., the first zipper teeth 121 and the second zipper teeth 122, or the third zipper teeth 131 and the fourth zipper teeth 132) are engaged. When the first zipper 12 is in the closed status S2 to seal the opening 11a, the storage space 111 of the bag body 11 is isolated from the outside. When the second zipper 13 is in the closed status S2, the storage space 111 is divided into a first sub-space 111a and a second sub-space 111b, wherein the first sub-space 111a is located between the first zipper 12 and the second zipper 13, and the second sub-space 111b is adapted to receive the object 1. The bag body 11 further has a perforation 11b which is located between the first zipper 12 and the second zipper 13 and communicates with the first sub-space 111a.

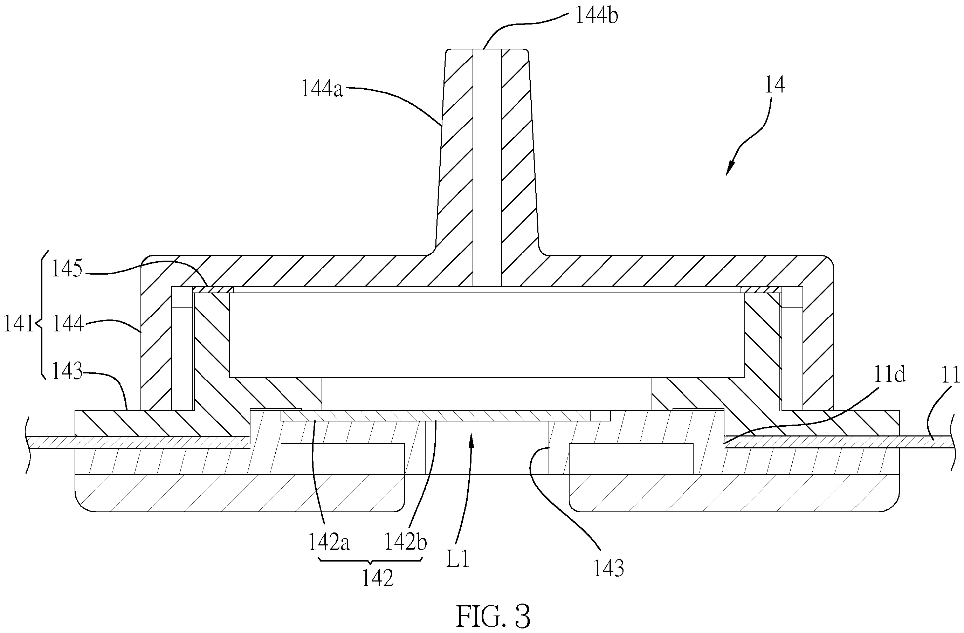

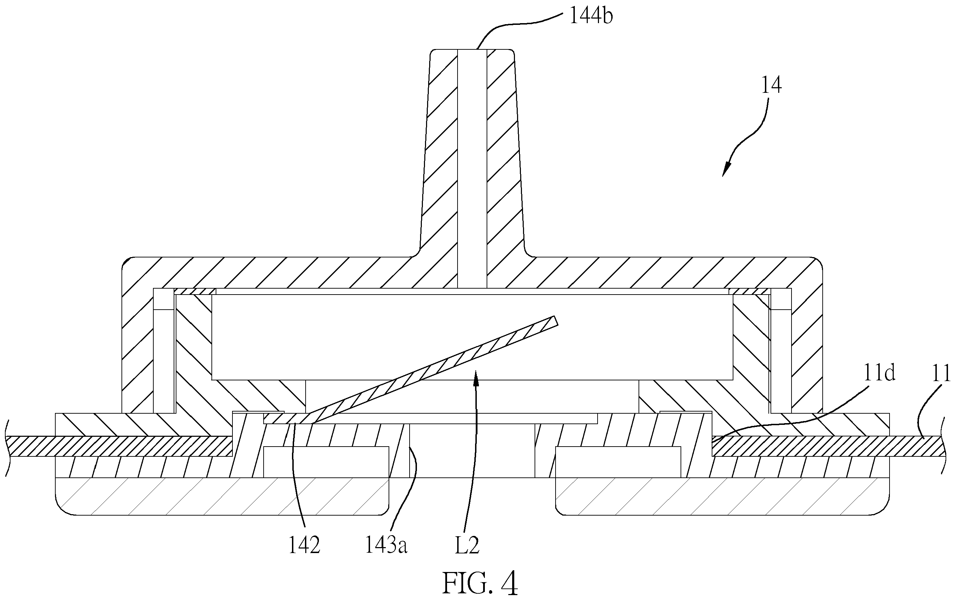

Referring FIG. 3 and FIG. 4, the exhaust device 14 includes a valve body 141, and a check valve member 142, wherein the check valve member 142 is located in the valve body 141. The valve body 141 includes a base 143, a top lid 144 and a sealing member 145, wherein the base 143 is engaged with an edge of the perforation 11b of the bag body 11, and has an inlet hole 143a communicating with the first sub-space 111a. The top lid 144 is engaged with the base 143 and has a projecting portion 144a. An outlet hole 144b is disposed on the projecting portion 144a and communicates inside and outside of the valve body 141. The sealing member 145 is disposed between the base 143 and the top lid 144 to increase a sealing performance when the base 143 is engaged with the top lid 144.

The check valve member 142 is a film 35 which is flexible, and has a first portion 142a and a second portion 142b, wherein the first portion 142a is connected to the base 143, and the second portion 142b is manipulated to be moved between a first position L1 and a second position L2. As the second portion 142b is located in the first position LI, the second portion 142b covers the inlet hole 143a to block the communication between the outlet hole 144b and the first sub-space 111a (see FIG. 3); when the second portion 142b of the check valve member 142 is located in the second position L2, the inlet hole 143a is opened to communicate an internal space of the valve body 141 and the first sub-space 111a (see FIG. 4).

The discharging device 20 includes an air pump 21, a connecting tube 22, a shielding member 23, and two joining pipes 24, wherein the air pump 21 is manipulated to drive air flowing to a certain direction. In the current embodiment, the air pump 21 is, but not limited to, a syringe.

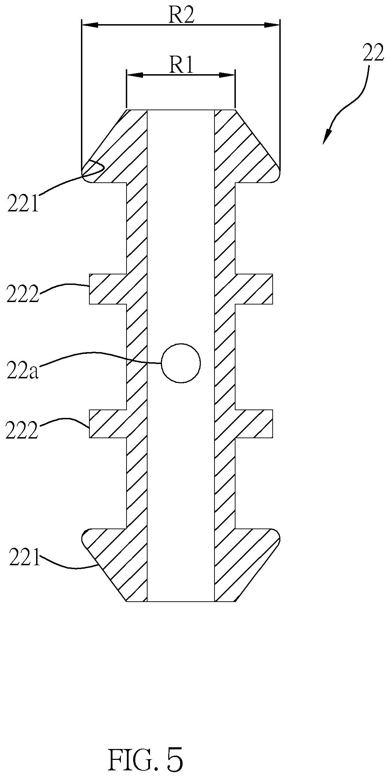

As shown in FIG. 5, each of two ends of the connecting tube 22 has a restricting portion 221, and an external diameter of each of the restricting portions 221 which is close to one of the ends of the connecting tube 22 is a first length R1; an external diameter of each of the restricting portions 221 which is away from the corresponding end of the connecting tube 22 is a second length R2, wherein the first length R1 is shorter than the second length R2. Two flanges 222 are disposed between the two restricting portions 221, and at least one air vent 22a is disposed on a wall of the connecting tube 22 between the two flanges 222. In the current embodiment, a number of the air vent 22a is one.

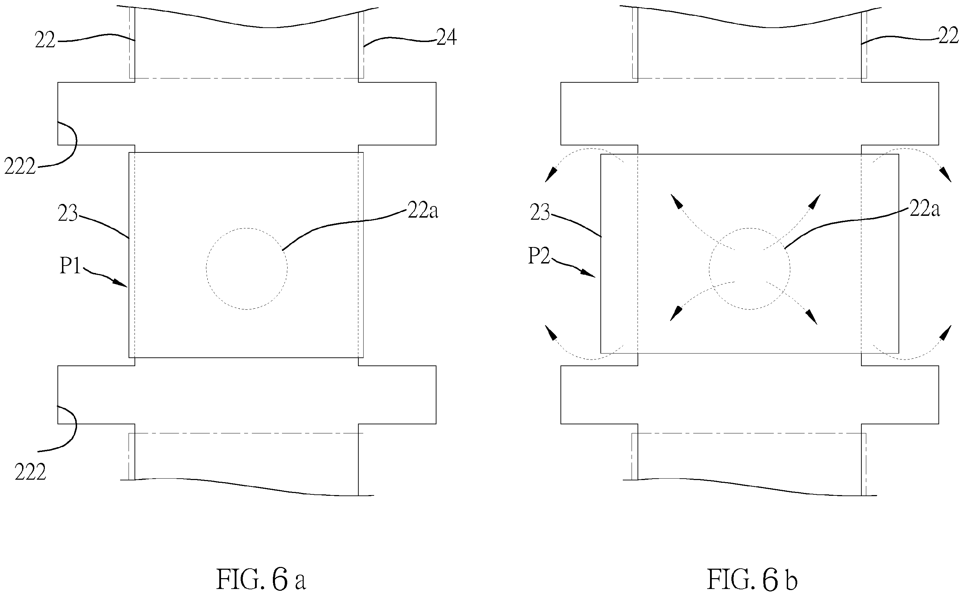

Referring to FIG. 6a and FIG. 6b, the shielding member 23 is a flexible tube, which fits around an exterior of the connecting tube 22 and is located between the two flanges 222. The shielding member 23 could change between a first status P1 and a second status P2. As the shielding member 23 is in the first status P1, an inner wall of the shielding member 23 abuts against an external surface of the connecting tube 22 to cover the air vent 22a (see FIG. 6a). As the shielding member 23 is in the second status P2, the shielding member 23 is transformed to form a gap between the inner wall of the shielding member 23 and the external surface of the connecting tube 22 (see FIG. 6b).

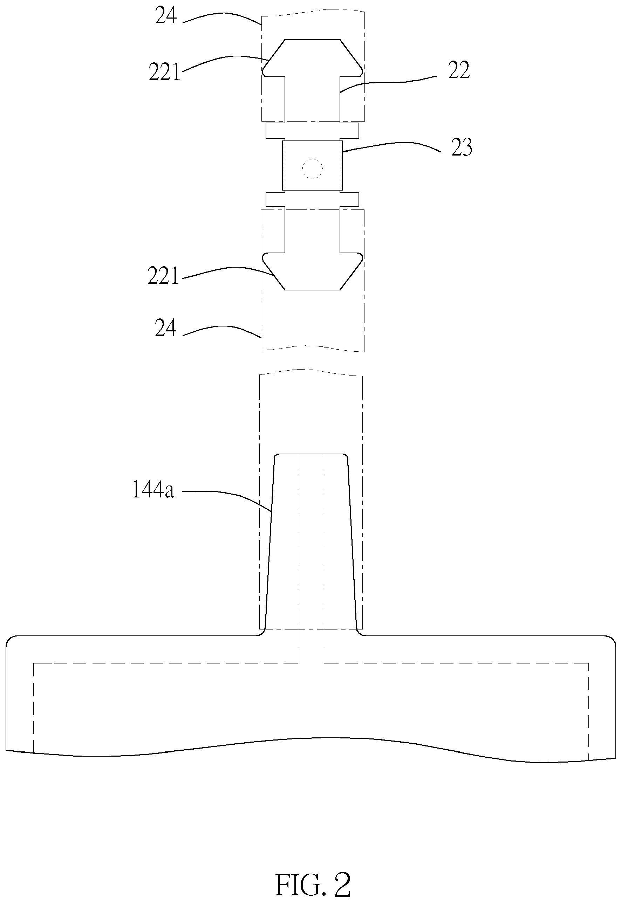

Referring to FIG. 1 and FIG. 2 again, one of the two joining pipes 24 is sleeved to the projecting portion 144a and one of the two restricting portions 221 of the connecting tube 22. The other joining pipe 24 is sleeved to the other restricting portion 221 of the connecting tube 22 and the air pump 21. The first length R1 of each of two restricting portions 221 is shorter than the second length R2, so that each of the two joining pipes 24 could easily fit around the corresponding restricting portion 221. Moreover, the two joining pipes 24 are hard to sleeve onto the flanges 222 of the connecting tubes 22, so that the flanges could restrict a length of a sleeved portion of each of the two joining pipes 24 that fits around the connecting tubes 22 to avoid the two joining pipes 24 covering the air vent 22a.

The components and the configurations of the sealing bag 100 of the first embodiment according to the invention are described above. A method of using the sealing bag 100 of the first embodiment is described as following. When the air pump 21 is manipulated to evacuate air from the inside to the outside of the bag body 11, the check valve member 142 swings from the first position L1 to the second position L2 to open the inlet hole 143a, allowing air in the bag body 11 to flow through the valve body 141 via the perforation 11b and to flow into the joining pipes 24, the connecting tube 22, and the air pump 21 via the outlet hole 144b. Since the shielding member 23 is flexible, when the air flows through the connecting tube 22, an inner air pressure of the shielding member 23 which covers the air vent 22a is decreased, so that the inner wall of the shielding member 23 abuts against the external surface of the connecting tube 22 to block the air vent 22a. Therefore, air outside of the connecting tube 22 and the shielding member 23 couldn't flow into the connecting tube 22 via the air vent 22a.

When the air pump 21 pushes air toward a direction of the bag body 11, the check valve member 142 swings back to the first position L1 and block the inlet hole 143a to avoid air flows back to the first sub-space 111a. At the same time, the air flows out via the air vent 22a of the connecting tube 22 to transform the flexible shielding member 23 into the second status P2, thereby to form a gap between the inner wall of the shielding member 23 and the external surface of the connecting tube 22, so that air could be exhausted out of the connecting tube 22.

By manipulating the air pump 21 to discharge air inside the bag body 11 out, and by pushing the air toward the direction of the bag body 11 then, the discharged air could be exhausted to the outside.

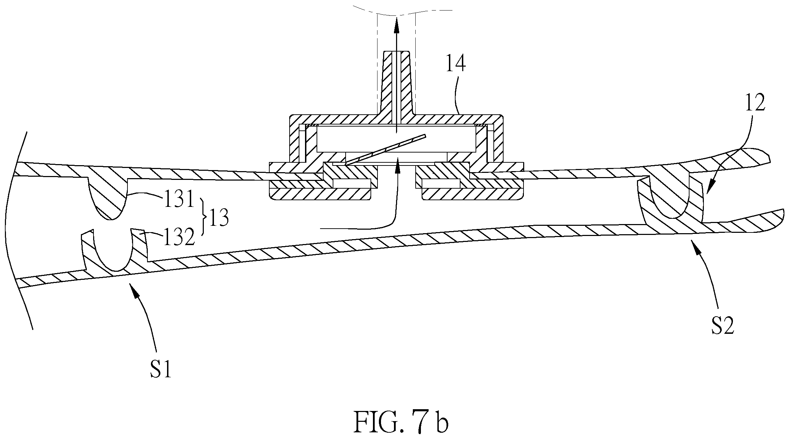

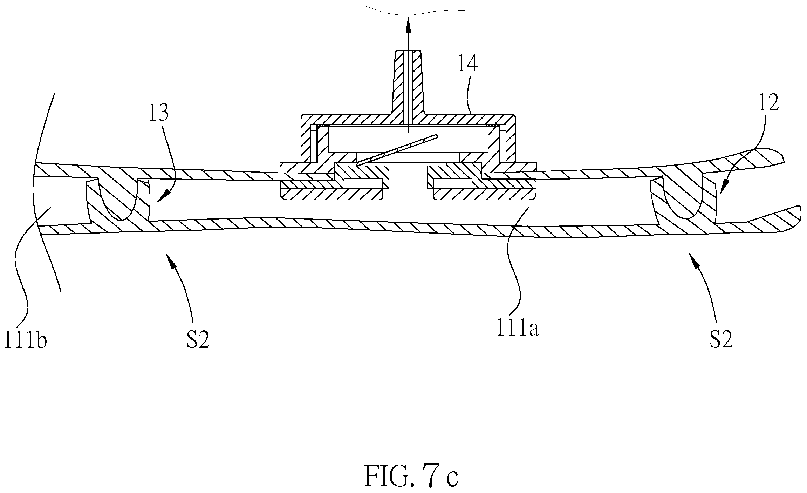

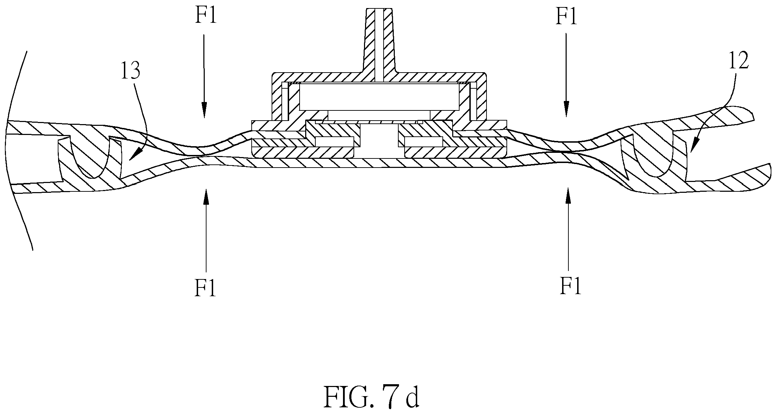

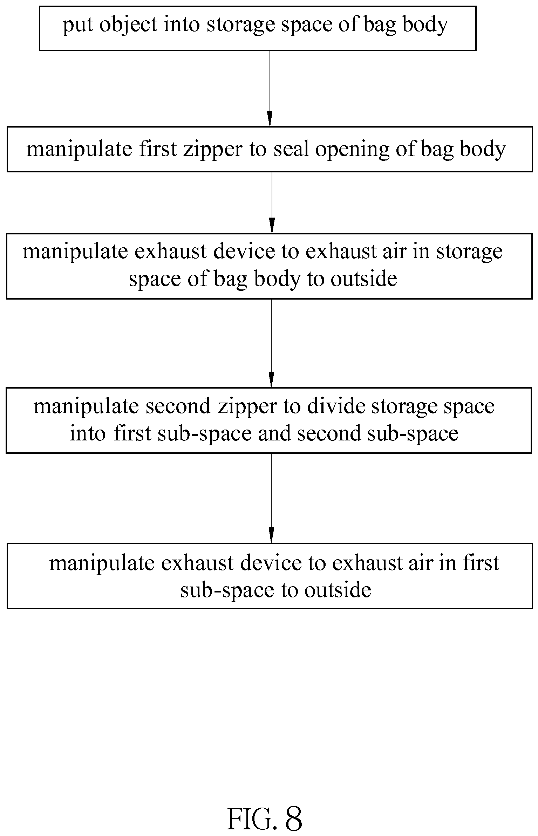

As shown in FIG. 7a to FIG. 7d, and FIG. 8, the steps of using the sealing bag 100 are described as follows: step 1, put the object 1 into the storage space 111 of the bag body 11, and squeeze the bag body 11 or manipulate the discharging device 20 to exhaust air in the storage space 111 to the outside (see FIG. 7a); step 2, manipulate the first zipper 12 to the closed status S2 to seal the opening 11a of the bag body 11; step 3, manipulate the discharging device 20 to exhaust air in the storage space 111 to the outside (see FIG. 7b); step 4, manipulate the second zipper 13 to the closed status S2 to divide the storage space into the first sub-space 111a and the second sub-space 111b, wherein the object 1 is restricted in the second sub-space 111b; step 5, manipulate the discharging device 20 to exhaust air in the first sub-space 111a into outside surroundings (see FIG. 7c), so that the first sub-space 111a is almost vacuumed, and therefore the joining pipe 24 could be removed from the projecting portion 144a (see FIG. 7d).

After executing above steps, since the first sub-space 111a is almost vacuumed, a force F1 that the atmospheric pressure exerts on the bag body 11 is almost equal to a product of atmospheric pressure and an area surrounded by the first zipper 12 and the second zipper 13. As a result, even if a little air remains in the second sub-space 111b, when the remained air expands as the temperature rises, the force F1 is still greater than another force generated by the expansion of the remained air in the second sub-space 111b which applies to open the bag body 11. Therefore, the second zipper 13 could be remained in the closed status S2, enhancing the sealing effect of the receiving structure 10.

Moreover, the exhaust device 14 and the object 1 are respectively located in the first sub-space 111a and the second sub-space 111b, so that even if the receiving structure 10 contains the powder-like substance, the powder couldn't get stuck into the exhaust device 14, affecting functions of sealing and air-exhausting.

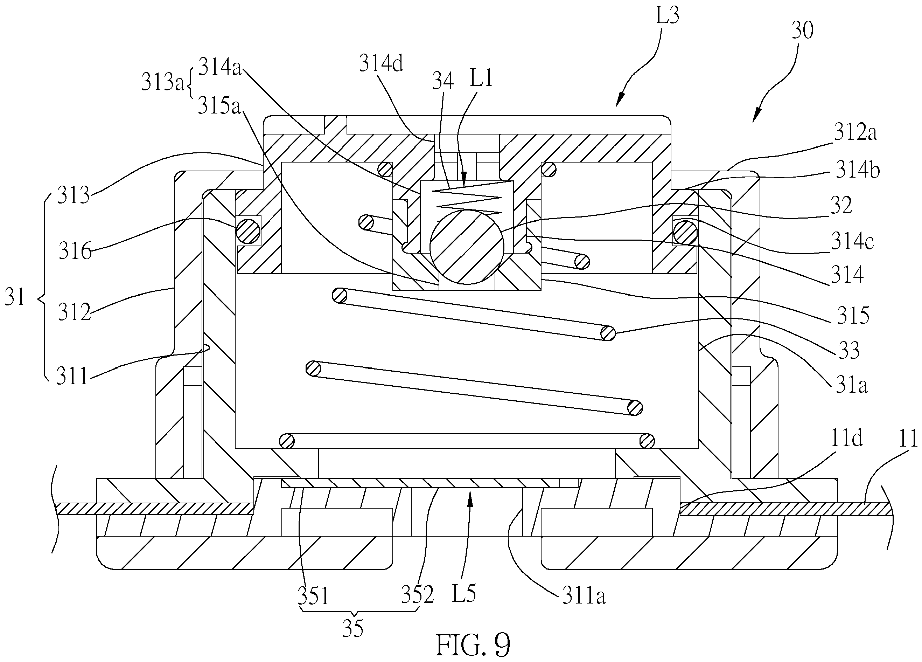

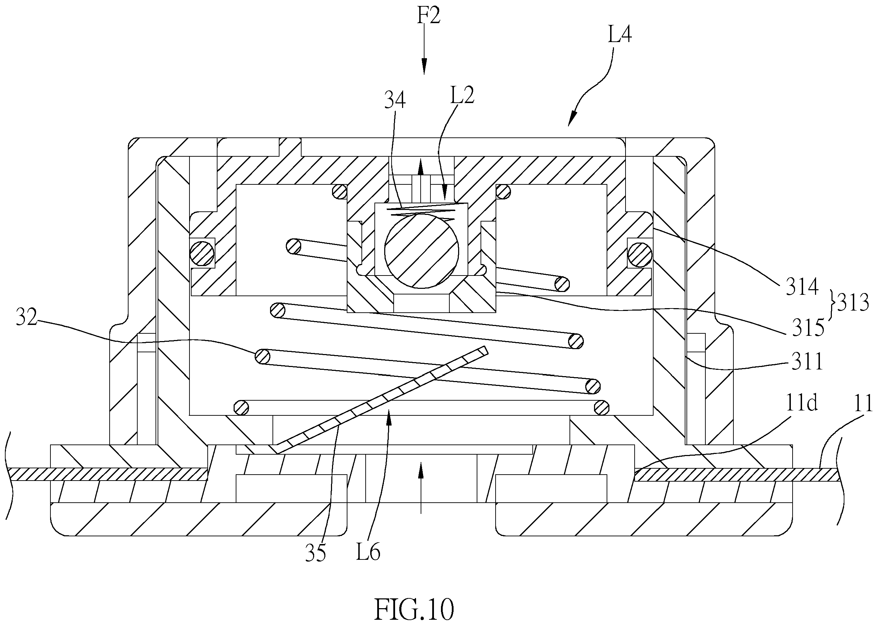

Base on the bag body 11, the first zipper 12, and the second zipper 13 of the aforementioned embodiment, the exhaust device 30 could have different forms. As shown in FIG. 9 and FIG. 10, an exhaust device 30 of the second embodiment according to the present invention includes a valve body 31, a check valve member 32, a first elastic member 33, a second elastic member 34, and a film 35, wherein the check valve member 32, the first elastic member 33, the second elastic member 34, and the film 35 are disposed in the valve body 31.

The valve body 31 includes a base 311, a housing 312, a top lid 313, and a sealing member 316, wherein the base 311 is engaged with the edge of the perforation 11b of the bag body 11, and the base 311 has an inlet hole 311a communicating with the first sub-space 111a. The housing 312 fits around the base 311, and the housing 312 has a blocking edge 312a which is bent inwardly.

The top lid 313 includes a body 314 and a resisting member 315 which is engaged with the body 314, wherein the body 314 is engaged with the base 311, and the body 314 and the base 311 encircle a valve interior space 31a . An outlet hole 313a is formed through the body 314 and the resisting member 315 to communicate the valve interior space 31a and the outside, wherein the body 314 has a first segment 314a of the outlet hole 313a, and the resisting member 315 has a second segment 315a of the outlet hole 313a. A diameter of the first segment 314a is greater than a diameter of the second segment 315a. The body 314 has a protruding ring 314b protruding outward in a radial direction of the outlet hole and abutting against the inner surface of the base 311. A ring groove 314c is recessed into the protruding ring 314b, and the sealing member 316 is disposed into the ring groove 314c to abut against the base 311 and the body 314 in order to prevent air flowing into the valve interior space 31a through a gap between the base 311 and the body 314.

The body 314 is manipulated between a third position L3 and a fourth position L4. As the body 314 is located in the third position L3 (see FIG. 9), the protruding ring 314b of the body 314 abuts against the blocking edge 312a of the housing 312, so that the body 314 couldn't disengage from the base 311. As the body 314 is located in the fourth position L4 (see FIG. 10), the body 314 is pressed into the interior space of the base 311 to reduce the volume of the valve interior space 31a.

The first elastic member 33 is located between the base 311 and the body 314 for urging the body 314 to move toward a direction of the third position L3.

The check valve member 32 is disposed in the outlet hole 313a. In the current embodiment, the check valve member 32 is, but not limited to a sphere. An exterior diameter of the check valve member 32 is set between the diameter of the first segment 314a and the diameter of the second segment 315a. The check valve member 32 is manipulated between a first position L1 (namely the first position L1 in the claim) and an second position L2 (namely the second position L2 in the claim). When the check valve member 32 is located in the first position LI, the check valve member 32 abuts against a wall of the second segment 315a (see FIG. 9); when the check valve member 32 is located in the second position L2, the check valve member 32 is located in the first portion 314a to communicate the valve interior space 31a and the outside via the outlet hole 313a (see FIG. 10).

The body 314 has a protruding portion 314d located in a wall of the first portion 314a. The second elastic member 34 is disposed in the outlet hole 313a, and two ends of the second elastic member 34 respectively abut against the protruding portion 314d and the check valve member 32 in order to urge the check valve member 32 to move toward a direction of the first position L1.

The film 35 has a first portion 351 and a second portion 352, wherein the first portion 351 is connected to the base 311, and the second portion 352 is controllable to be moved between a fifth position L5 and a sixth position L6. As the second portion 352 is located in the fifth position L5, the second portion 352 covers the inlet hole 311a (see FIG. 9); as the second portion 352 is located in the sixth position L6, the inlet hole 311a opens and allows the valve interior space 31a to communicate with the first sub-space 111a (see FIG. 10).

The method of using the exhaust device 30 of the second embodiment according to the present invention is described as follows. An operator applies an external force F2 to press the top lid 313 toward the direction of the bag body 11 (namely, moving from the third position L3 to the fourth position L4) and squeeze the bag body 11. At the same time, air in the bag body 11 pushes the film 35 to be shifted to the sixth position L6 and enters the valve interior space 31a. The top lid 313 moves toward the direction of the bag body 11, so that the volume of the valve interior space 31a is reduced, increasing a pressure of the valve interior space 31a and generating a force to push the check valve member 32 to move from the first position L1 to the second position L2. As a result, air could flow out of the valve interior space 31a through the outlet hole 313a.

When the air pressure in the squeezed bag body 11 is decreased to a predetermined value, the film 35 returns to the fifth position L5 to seal the inlet hole 311a. In practice, the film 35 could be omitted depending on the required demand.

When the second elastic member 34 conquers the force generated by air in the valve interior space 31a pushing the check valve member 32, the second elastic member 34 pushes the check valve member 32 back to the first position L1. In other words, when the pressure in the valve interior space 31a is lower than a predetermined value, the check valve member 32 blocks the communication between the valve interior space 31a and the outside. After the operator removes the external force F2, the first elastic member 33 pushes the body 314 returning to the third position L3.

Method of using the sealing bag of the second embodiment is similar to that of the first embodiment, except that the exhaust device 30 doesn't need to be used with the discharging device 20. By manipulating the exhaust device 30 from the third position L3 to the fourth position L4, air in the first sub-space 111a (and the second sub-space 111b) could be exhausted, achieving the function of air exhausting.

## Claims

1. A sealing bag (100), comprising:
a bag body (11) having a storage space (111) and an opening (11a) communicating the storage space (111) and an outside of the bag body (11);
a first zipper (12), which is disposed in the bag body (11) and is adapted to seal the opening (11a);
a second zipper (13), which is disposed in the bag body (11) and is adapted to divide the storage space (111) into a first sub-space (111a) and a second sub-space (111b), wherein the first sub-space (111a) is located between the first zipper (12) and the second zipper (13); and
an exhaust device (14, 30), which is disposed between the first zipper (12) and the second zipper (13) and is adapted to discharge air in the first sub-space (111a) to the outside.

2. The sealing bag (100) of claim 1, wherein the exhaust device (14, 30) comprises a valve body (141, 31) and a check valve member (142, 32); the valve body (141, 31) has an inlet hole (143a, 311a) and an outlet hole (144b, 313a), wherein the inlet hole (143a, 311a) communicates with the first sub-space (111a), and the outlet hole (144b, 313a) communicates an internal space of the valve body (141, 31) and the outside; the check valve member (142, 32) is controllable to be moved between a first position (L1) and a second position (L2); when the check valve member (142, 32) is located in the first position (L1), the outlet hole (144b, 313a) does not communicate with the inlet hole (143a, 311a); when the check valve member (142, 32) is located in the second position (L2), the outlet hole (144b, 313a) communicates with the inlet hole (143a, 311a).

3. The sealing bag (100) of claim 2, wherein the valve body (31) comprises a base (311) and a top lid (313); the base (311) is engaged with the bag body (11), and comprises the inlet hole (311a); the top lid (313) has the outlet hole (313a), and is engaged with the base (311) and is movable between a third position (L3) and a fourth position (L4); when the top lid (313) is located in the third position (L3), the check valve member (32) stays in the first position (L1) and abuts against the top lid (313) and seals the outlet hole (313a); when the top lid (313) is located in the fourth position (L4), the check valve member (32) moves to the second position (L2), so that the outlet hole (313a) for communicating the internal space of the valve body (31) and the outside communicates with the inlet hole (311a).

4. The sealing bag (100) of claim 3, wherein the exhaust device (30) comprises a first elastic member (33) for urging the top lid (313) to move the top lid (313) toward a direction of the third position (L3).

5. The sealing bag (100) of claim 3 or 4, wherein the exhaust device (30) comprises a second elastic member (34); the outlet hole (313a) of the top lid (313) has a first segment (314a) and a second segment (315a), a diameter of the first segment (314a) is greater than a diameter of the second segment (315a); the check valve member (32) is located in the outlet hole (313a); the second elastic member (34) urges the check valve member (32) to abut against a wall of the second segment (315a), keeping the check valve member (32) in the first position (L1).

6. The sealing bag (100) of claim 5, wherein the top lid (313) comprises a body (314) and a resisting member (315); the body (314) has the first segment (314a) of the outlet hole (313a) and an protruding portion (314d) which is located on the wall of the first segment (314a); the resisting member (315) has the second segment (315a) of the outlet hole (313a); two ends of the second elastic member (34) respectively abut against the protruding portion (314d) and the check valve member (32).

7. The sealing bag (100) of claim 3, wherein the valve body (31) comprises at least one sealing member (316) disposed between the base (311) and the top lid (313).

8. The sealing bag (100) of claim 7, wherein the valve body (31) comprises a housing (312); the top lid (313) has a protruding ring (314b) protruding outward in a radial direction of the outlet hole (313a), the sealing member (316) is located between a surface of the protruding ring (314b) and an inner surface of the base (311); the housing (312) fits around the base (311) and has a blocking edge (312a) for blocking the protruding ring (314b) of the top lid (313), so that the top lid (313) does not disengaged from the base (311).

9. The sealing bag (100) of claim 3, wherein the valve body (31) comprises a film (35) which is flexible and is controllable to be moved between a fifth position (L5) and a sixth position (L6); a part of the film (35) is connected to the base (311); another part of the film (35) covers the inlet hole (311a) when the film (35) is located in the fifth position (L5), and allows the internal space of the valve body (31) communicates with the first sub-space (111a) when the film (35) is located at the sixth position (L6).

10. The sealing bag (100) of claim 2, wherein the valve body (141) comprises a base (143) and a top lid (144); the base (143) is engaged with the bag body (11), and has the inlet hole (143a); the top lid (144) is engaged with the base (143), and has the outlet hole (144b); the check valve member (142) is flexible, and a part of the check valve member (142) is connected to the base (143); another part of the check valve member (142) covers the inlet hole (143a) when the check valve member (142) is located in the first position (L1), and allows the internal space of the valve body (141) communicates with the first sub-space (111a) when the check valve member (142) is located in the second position (L2).

11. The sealing bag (100) of claim 10, further comprising a discharging device (20) for being manipulated to discharge air in the first sub-space (111a) to the outside via the exhaust device (14); the top lid (144) has a projecting portion (144a); the outlet hole (144b) is located in the projecting portion (144a); the projecting portion (144a) is adapted to be connected to the discharging device (20).

12. The sealing bag (100) of claim 11, wherein the discharging device (20) comprises a connecting tube (22), an air pump (21), and a shielding member (23); an end of the connecting tube (22) is connected to the projecting portion (144a), and at least one air vent (22a) is disposed on a wall of the connecting tube (22); the air pump (21) is connected to another end of the connecting tube (22); the shielding member (23) is disposed on the connecting tube (22) and is changeable between a first status (P1) and a second status (P2); when the air pump (21) evacuates air in the first sub-space (111a) to the outside of the bag body (11), the check valve member (142) is located in the second position (L2), and the shielding member (23) is in the first status (P1) to cover the air vent (22a); when the air pump (21) pushes air toward a direction of the bag body (11), the check valve member (142) is in the first position (L1), and the shielding member (23) is in the second status (P2), so that the air vent (22a) communicates with the outside.

13. The sealing bag (100) of claim 12, wherein the discharging device (20) comprises a joining pipe (24) which is flexible; an end of the joining pipe (24) fits around the projecting portion (144a); another end of the joining pipe (24) fits around an end of the connecting tube (22), and the air vent (22a) is not covered by the joining pipe (24).

14. The sealing bag (100) of claim 13, wherein the shielding member (23) is a flexible tube, and fits around an exterior of the connecting tube (22); an inner wall of the shielding member (23) in the first status (P1) abuts against an external surface of the connecting tube (22); the shielding member (23) in the second status (P2) is transformed to form a gap between the inner wall of the shielding member (23) and the external surface of the connecting tube (22) to exhaust the air.

15. A method of using the sealing bag (100) of claim 1, comprising:
A. manipulating the first zipper (12) to seal the opening (11a) of the bag body (11);
B. manipulating the exhaust device (14, 30) to exhaust air in the storage space (111) of the bag body (11) to the outside;
C. manipulating the second zipper (13) to divide the storage space (111) into the first sub-space (111a) and the second sub-space (111b);
D. manipulating the exhaust device (14, 30) to exhaust air in the first sub-space (111a) to the outside.

16. The method of using the sealing bag (100) of claim 15, wherein before executing step A, the method further comprises a step that manipulating the exhaust device (14, 30) to exhaust air in the storage space (111).

17. The method of using the sealing bag (100) of claim 15, wherein before executing step A, the method further comprises a step that squeezing the bag body (11) to exhaust air in the storage space (111).
